# EUROPÄISCHE PATENTSCHRIFT

(11) **EP 1 919 226 B1**
(45) Veröffentlichungstag und Bekanntmachung des Hinweises auf die Patenterteilung: **02.01.2013**
(21) Anmeldenummer: 06023040.6
(22) Anmeldetag: 06.11.2006
(51) Int. Cl.: H04W 76/02

(54) **Verfahren zum Mitteilen von Aktivierungsinformationen über primäre PDP-Kontexte, Verfahren zum Aktivieren von primären PDP-Kontexten, sowie Telekommunikationsnetzwerk und mobiles elektronisches Endgerät**
Method for communicating activation information for primary PDP contexts, method for activating primary PDP contexts, as well a telecommunications network and a mobile electronic terminal
Procédé de communication des informations d'activation des contextes PDP primaires, procédé d'activation des contextes PDP primaires, ainsi qu'un réseau de télécommunication et terminal électronique mobile

(43) Veröffentlichungstag der Anmeldung: 07.05.2008
(73) Patentinhaber: Vodafone Holding GmbH, 40213 Düsseldorf (DE)
(72) Erfinder: Kulakov, Alexej, 40227 Düsseldorf (DE); Wild, Peter, 47807 Krefeld (DE)
(74) Vertreter: Müller, Thomas

(56) Entgegenhaltungen:
- WO-A-2006/055933
- QUALCOMM; ESG ENGINEERING SERVICES GROUP: "Multiple PDP Contexts in UMTS; 80-W0958-1; Revision A"[Online] 28. August 2006 (2006-08-28), Seiten 1-24, XP002428095 Gefunden im Internet: URL:http://www.qualcomm.com/esg/media/pdf/ Multiple_PDP_Contexts_UMTS.pdf> [gefunden am 2007-04-04]

## Beschreibung

Die vorliegende Erfindung betrifft ein Verfahren zum Mitteilen von Aktivierungsinformationen über die Möglichkeit eines Aktivierungsaufbaus wenigstens eines, zusätzlich zu einem ersten primären PDP-Kontext zu einem ersten Access Point Name, weiteren primären PDP-Kontextes zu einem weiteren Access Point Name durch ein mobiles Telekommunikationsnetz an ein in dem mobilen Telekommunikationsnetz registriertes mobiles Endgerät, wobei durch den Aktivierungsaufbau eines primären PDP-Kontextes zu einem Access Point Name das mobile Telekommunikationsnetz dem mobilen Endgerät eine Verbindung zu einem Internet-Service-Anbieter zur Verfügung stellt. Ferner betrifft die Erfindung ein Verfahren zum Aktivieren eines, zusätzlich zu einem ersten primären PDP-Kontext zu einem ersten Access Point Name, weiteren primären PDP-Kontextes zu einem weiteren Access Point Name innerhalb eines mobilen Telekommunikationsnetzes durch ein in dem mobilen Telekommunikationsnetz registriertes mobiles elektronisches Endgerät, insbesondere durch ein Mobiltelefon. Des weiteren betrifft die Erfindung ein Telekommunikationsnetzwerk, welches zur Kommunikation wenigstens eines in dem Telekommunikationsnetzwerk registrierten mobilen elektronischen Endgerätes, insbesondere eines Mobiltelefons, zu wenigstens einem ersten Access Point Name ausgebildet ist sowie ein mobiles elektronisches Endgerät, insbesondere Mobiltelefon, welches in einem Telekommunikationsnetzwerk registriert ist und welches zum Aktivieren wenigstens eines primären PDP-Kontextes zu wenigstens einem Access Point Name ausgebildet ist, wobei das mobile elektronische Endgerät eine Initialisierungseinrichtung zum Initiieren einer Aktivierungsanforderungsnachricht an den wenigstens einen Access Point Name aufweist.

Bei heutigen 3GPP Mobilfunknetzen, beispielsweise GPRS oder UMTS, ist es möglich mehrere primäre PDP-Kontexte über verschiedene Access Point Names (Access Point Name = APN) zur gleichen Zeit zu aktivieren. PDP-Kontexte (PDP = Packet Data Protocol) sind Informationen, die eine GPRS-Verbindung zwischen einem mobilen Endgerät, wie einem Mobiltelefon, und einem externen Netz definieren. D.h., bei einem Access Point Name handelt es sich um den Namen eines externen Anschlusses in einem GPRS-Netz. In GPRS-Netzen ist es das Netz, zu dem der Teilnehmer eine Verbindung aufbauen darf. Wenn die GPRS-Verbindung aktiv ist, wird dies in der Regel im Display des Mobiltelefons angezeigt. Die PDP-Kontextaktivierung bedeutet ferner, dass das Mobiltelefon eine IP-Adresse erhält und weitere teilnehmerspezifische Parameter aktiviert werden.
In einem GPRS-Netz wird zwischen primären PDP-Kontexten und sekundären PDP-Kontexten unterschieden. Bei der Aktivierung eines zweiten primären PDP-Kontextes erfolgt dies über eine neuen Access Point Name, d.h. der Access Point Name des ersten primären PDP-Kontextes ist unterschiedlich zu dem Access Point Name des zweiten primären PDP-Kontextes. Bei einem sekundären PDP-Kontext dagegen wird der gleiche Access Point Name des ersten primären PDP-Kontextes verwendet.

Der APN wird nur innerhalb des GPRS-Netzes verwendet und kann für die Datenübertragung, die Verbindung zu einem Portal oder für Multimedia Messaging Services (MMS) genutzt werden.

Zur Nutzung eines mobilen Datendienstes GPRS (GPRS = General Packet Radio Service) kann ein Teilnehmer von seinem mobilen Endgerät einen primären Packet-Data-Protocol-Kontext aktivieren, der ihm einen so genannten GTP-Tunnel (GTP = GPRS Tunneling Protocol) durch das mobile Telekommunikationsnetz des Mobilfunkbetreibers zu einem Internet-Service-Anbieter zur Verfügung stellt. Der APN bezeichnet dabei den vom Teilnehmer gewünschten Anschluss eines Internet-Service-Anbieters. Der Teilnehmer kann über sein mobiles Endgerät einen ersten primären PDP-Kontext zu APN1 und einen zweiten primären PDP-Kontext zu APN2 aktivieren. Dies erfolgt durch Senden von Aktivierungsanfragen, wie "Activate PDP Context request", zu den verschiedenen APN's. Dies ist in dem 3GPP TS23.060-Standard spezifiziert.

Aus der Druckschrift "QUALCOMMESG ENGINEERING SERVICES GROUP: "*Multiple PDP Contexts in UMTS; 80-W0958-1; Revision A*", 28. August 2006 ist die Verwendung von bis zu drei primären PDP Kontexten in einer Testmobilstation bekannt.

Derartige Aktivierungsanfragen gewinnen mit zunehmender Nutzung von mobilen Datendiensten, so genannten packet switched services, und durch die wachsende Popularität von so genannten "always-on-services" an Bedeutung. Bei den "always-on-services" wird der PDP-Kontext nach dem Einschalten des mobilen Endgerätes automatisch aktiviert und eine Verbindung zu einem Internet-Service-Anbieter hergestellt. Um die mobilen Datendienste zu nutzen, muss sowohl das Netz des Mobilfunkbetreibers als auch das mobile Endgerät des Teilnehmers des Mobilfunkbetreibers die PDP-Kontextaktivierung unterstützen.

"Always-on-services" nennt man Dienste über die ein Teilnehmer eines mobilen Telekommunikationsnetzes ständig mit einem Carrier, d.h. einer Gesellschaft zum Betrieb von Telekommunikationsnetzen, Online ist. Der "always-on-service" hat den Vorteil, dass der Benutzer sich nicht ständig einwählen und ausloggen muss. Der Dienst setzt aber aus wirtschaftlichen Gründen Anschlüsse mit Datenpaketvermittlung voraus. Ein "always-on-service" wird im Mobilfunkbereich eingesetzt, um Instant-Messaging (IM) oder E-Mail kostengünstig zu realisieren. Damit der Mobilfunkteilnehmer ständig zu vertretbaren Kosten mit dem Carrier verbunden sein kann, setzt das allerdings paketvermittelte Telekommunikationsnetze, wie GPRS- oder UMTS-Netze, voraus.

So gibt es das Szenario, dass eine zusätzliche Aktivierung eines primären PDP-Kontextes, dem so genannten "second primary PDP context", zu einem zweiten APN, d.h. zu einem weiteren Internet-Service-Anbieter, von der Netzseite des Mobilfunkbetreibers nicht unterstützt wird. In diesem Fall wird entsprechend der 3GPP-Spezifikation das mobile Endgerät des Teilnehmers eine Aktivierungsanfrageablehnung, einen so genannten "Activate PDP context request reject", entsprechend der in der 3GPP TS24.008-Spezifikation vorgesehenen Ablehnungskodes erhalten.

Die Prozedur des Senden von weiteren Aktivierungsanfragen, von weiteren so genannten "Activate PDP context requests", zu dem mobilen Telekommunikationsnetz des Mobilfunkbetreibers verbraucht unnötige Funkressourcen, wenn das mobile Telekommunikationsnetz weitere Aktivierungen nicht unterstützt. Ein weiterer Nachteil ist die zurückgesendete Ablehnung der Aktivierungsanfrage, d.h. die Ablehnung des Verbindungsaufbaus zu einem weiteren Internet-Service-Anbieter, da diese implementierungsabhängig unterschiedlich sein und so verschiedene Reaktionen in dem mobilen Endgerät des Teilnehmers hervorrufen kann.

Aufgabe der Erfindung ist es, die Anzahl der Nachrichtenübermittlungen von einem mobilen Endgerät zu dem mobilen Telekommunikationsnetz, in dem das mobile Endgerät registriert ist, zu verringern, um Funkressourcen frei zu halten. Hierzu soll ein Verfahren, ein Telekommunikationsnetzwerk und eine mobiles elektronisches Endgerät geschaffen werden, welche ermöglichen, dass das mobile Endgerät selbstständig erkennt, wie viele Verbindungen zu Internet-Service-Anbietern von Seiten des mobilen Endgerätes bzw. von Seiten des Telekommunikationsnetzes, d.h. von Seiten des Mobilfunkbetreibers des Telekommunikationsnetz, bei dem das mobile Endgerät registriert ist, möglich sind. Dem mobilen Endgerät soll insbesondere mitgeteilt werden, ob zusätzlich zu einem ersten primären PDP-Kontext zu einem ersten Access Point Name zumindest ein weiterer primärer PDP-Kontext zu einem zu dem ersten Access Point Name unterschiedlichen weiteren Access Point Name aufgebaut werden kann.

Diese Aufgabe wird erfindungsgemäß durch ein Verfahren zum Mitteilen von Aktivierungsinformationen mit den Merkmalen gemäß dem unabhängigen Patentanspruch 1, durch ein Verfahren zum Aktivieren eines weiteren primären PDP-Kontextes gemäß dem unabhängigen Patentanspruch 4, durch ein Telekommunikationsnetzwerk mit den Merkmalen gemäß dem unabhängigen Patentanspruch 7 sowie durch ein mobiles elektronisches Endgerät mit den Merkmalen des unabhängigen Patentanspruchs 9 gelöst. Weitere Vorteile, Merkmale, Details, Aspekte und Effekte der Erfindung ergeben sich aus den Unteransprüchen, der Beschreibung sowie der beigefügten Zeichnung. Merkmale und Details, die im Zusammenhang mit den erfindungsgemäßen Verfahren zum Mitteilen von Aktivierungsinformationen gemäß Patentanspruch 1 beschrieben werden, gelten dabei selbstverständlich auch im Zusammenhang mit der erfindungsgemäßen Verfahren zum Aktivieren eines weiteren primären PDP-Kontextes gemäß dem Patentanspruch 4, einem Telekommunikationsnetzwerk gemäß dem unabhängigen Patentanspruch 7 sowie einem mobilen elektronischen Endgerät gemäß Patentanspruch 9, und umgekehrt.

Die Aufgabe wird gemäß dem ersten Aspekt der Erfindung durch ein Verfahren zum Mitteilen von Aktivierungsinformationen über die Möglichkeit eines Aktivierungsaufbaus wenigstens eines, zusätzlich zu einem ersten primären PDP-Kontext zu einem ersten Access Point Name, weiteren primären PDP-Kontextes zu einem weiteren Access Point Name durch ein mobiles Telekommunikationsnetz an ein in dem mobilen Telekommunikationsnetz registriertes mobiles Endgerät, wobei durch den Aktivierungsaufbau eines primären PDP-Kontextes zu einem Access Point Name das mobile Telekommunikationsnetz dem mobilen Endgerät eine Verbindung zu einem Internet-Service-Anbieter zur Verfügung stellt, gelöst, bei dem die Aktivierungsinformationen zusammen mit den Systeminformationen zum bestimmungsgemäßen Betrieb des mobilen elektronischen Endgerätes über Luft- bzw. Funkschnittstellen von Basisstationen des mobilen Telekommunikationsnetzes an das mobile Endgerät übertragen werden.

Durch die Übertragung der Aktivierungsinformationen zusammen mit den Systeminformationen zum bestimmungsgemäßen Betrieb des mobilen elektronischen Endgerätes erhält das mobile Endgerät, beispielsweise ein Mobiltelefon, ein Smartphone, ein PDA oder ein Kleincomputer mit einer Funkschnittstelle, Informationen über die Möglichkeit des Aktivierens von weiteren primären PDP-Kontexten. Das bedeutet, das mobile Endgerät erhält zu jedem Zeitpunkt aktuelle Informationen über die Möglichkeit des Aktivierens von weiteren primären PDP-Kontexten, die zusätzlich zu einem ersten primären PDP-Kontext aktiviert werden können oder auch nicht aktiviert werden können. Das mobile Endgerät sendet keine Aktivierungsanfrage an einen weiteren primären PDP-Kontext zu einem weiteren, zum ersten APN unterschiedlichen weiteren APN, wenn kein weiterer Aktivierungsaufbau möglich ist. Dies erspart zum einen eine Vielzahl von Signalisierungsnachrichten zwischen dem mobilen Endgerät und mobilen Telekommunikationsnetz bzw. der Betreibergesellschaft des mobilen Telekommunikationsnetzes. Hierdurch werden keine unnötigen Funkressourcen verbraucht. Zum anderen kann das mobile Endgerät bzw. die Software des mobilen Endgerätes einfacher ausgebildet werden, da mobile Endgeräte von unterschiedlichen Herstellern jeweils anders mit einer Ablehnung der Aktivierungsanfrage umgehen würden, was zu Komplikationen führen kann.

Bevorzugt ist ferner ein derartiges Verfahren, bei dem Informationen über die Anzahl möglicher Aktivierungsaufbaue an weiteren primären PDP-Kontexten zu weiteren Access Point Names, die das mobile Endgerät durchführen kann, zusammen mit den Systeminformationen an das mobile Endgerät übertragen werden. Hierdurch kann ein Teilnehmer eines mobilen Telekommunikationsnetzes über das mobile Endgerät erkennen, auf wie viele primäre PDP-Kontexte er nebeneinander zugreifen kann bzw. wie viele primäre PDP-Kontexte er nebeneinander aktivieren kann. Dies ermöglicht dem Teilnehmer einen schnellen Überblick über die Anzahl seiner gleichzeitig möglichen Verbindungen zu unterschiedlichen Internet-Service-Anbietern, die ihm das mobile Telekommunikationsnetz des Mobilfunkbetreibers ermöglicht/erlaubt. Dies ist insbesondere dann für den Teilnehmer wichtig, wenn er einen oder mehrere so genannte "always-on-services" nutzen möchte. Der Teilnehmer erspart sich unnötige Aktivierungsanfragen, falls das mobile Telekommunikationsnetz seines Betreibers beispielsweise nur eine Verbindung zu einem Internet-Service-Anbieter zulässt.

Vorteilhaft ist dabei ein Verfahren, bei dem von einer Rechnereinheit des Betreibers des mobilen Telekommunikationsnetzes die Aktivierungsinformationen und/oder die Informationen über die Anzahl möglicher Aktivierungsaufbaue an weiteren primären PDP-Kontexten zusammen mit den Systeminformationen zum bestimmungsgemäßen Betrieb des mobilen elektronischen Endgerätes an das in dem mobilen Telekommunikationsnetz registrierte mobile Endgerät übertragen werden. Die Rechnereinheit des Betreibers sendet die Aktivierungsinformationen und/oder die Informationen über die Anzahl möglicher Aktivierungsaufbaue zusammen mit den allgemeinen Systeminformationen über entsprechende im mobilen Telekommunikationsnetz des Betreibers vorgesehen Basisstationen an die jeweiligen mobilen Endgerät. Die Basisstationen oder auch Bodenstationen sind Sende- und Empfangseinheiten, die bestimmte Funkzellen, in denen sich die mobilen Endgeräte aufhalten, abdecken. Basisstation ist normalerweise ein Ausdruck der in einem GSM-Mobilfunknetz gebräuchlich ist. Im Lichte dieser Erfindung werden unter einer Basisstation auch UMTS-Basisstationen, d.h. so genannte Node-B's eines UMTS-Mobilfunknetzes, verstanden. Der Rechnereinheit des Betreibers des mobilen Telekommunikationsnetzes sind Schnittstellen zugeordnet, über die Nachrichten übertragen werden können.

Die Aufgabe wird gemäß eines zweiten Aspektes der Erfindung durch ein Verfahren zum Aktivieren eines, zusätzlich zu einem ersten primären PDP-Kontext zu einem ersten Access Point Name, weiteren primären PDP-Kontextes zu einem weiteren Access Point Name innerhalb eines mobilen Telekommunikationsnetzes durch ein in dem mobilen Telekommunikationsnetz registriertes mobiles elektronisches Endgerät, insbesondere durch ein Mobiltelefon, gelöst, bei dem das mobile elektronische Endgerät eine Überprüfung der Aktivierungsinformationen über die Möglichkeit eines Aktivierungsaufbaus wenigstens eines, zusätzlich zu einem ersten primären PDP-Kontext zu einem ersten Access Point Name, weiteren primären PDP-Kontextes zu einem weiteren Access Point Name und/oder eine Überprüfung der Informationen über die Anzahl der möglichen Aktivierungsaufbaue an weiteren primären PDP-Kontexten zu weiteren Access Point Names, die gemäß dem zuvor beschriebenen erfindungsgemäßen Verfahren dem mobilen Endgerät mitgeteilt worden sind, durchführt.

Durch die Überprüfung der Aktivierungsinformationen über die Möglichkeit eines Aktivierungsaufbaus wenigstens eines, zusätzlich zu einem ersten primären PDP-Kontext zu einem ersten Access Point Name, weiteren primären PDP-Kontextes zu einem weiteren Access Point Name und/oder durch die Überprüfung der Informationen über die Anzahl der möglichen Aktivierungsaufbaue an weiteren primären PDP-Kontexten zu weiteren Access Point Names durch das mobile elektronische Endgerät selbst, kann der Signalisierungsaufwand durch das mobile Endgerät bzw. die Nachrichtenübertragung im mobilen Telekommunikationsnetz reduziert werden. Durch die Überprüfung der mit dem allgemeinen Systeminformationen übertragenen Aktivierungsinformationen und Informationen über die Anzahl der möglichen Aktivierungsaufbaue durch das mobile Endgerät selbst, erhält dieses direkt die Antwort darauf, ob zusätzlich zu der Aktivierung des ersten primären PDP-Kontextes Aktivierungen eines weiteren primären PDP-Kontextes oder mehrerer weiterer primärer PDP-Kontexte durch das mobile Endgerät möglich sind. Das mobile Endgerät muss keine weitere Softwareimplementierung aufweisen, die die entsprechenden Ablehnungsnachrichten einheitlich interpretieren kann.

Bevorzugt ist ferner ein Verfahren, bei dem das mobile Endgerät nach der Überprüfung und bei Feststellung der Möglichkeit des Aktivierens von weiteren primären PDP-Kontexten an weitere Access Point Names wenigstens einen Aktivierungsaufbau eines weiteren primären PDP-Kontextes zu einem weiteren Access Point Name durchführt. Dieses Verfahren hat den Vorteil, dass das mobile Endgerät nicht mit einer Ablehnung von Seiten des mobilen Telekommunikationsnetzes rechnen muss, da das mobile Endgerät Kenntnis von der Möglichkeit weiterer Verbindungen zu weiteren APN's, d.h. zu anderen Internet-Service-Anbietern, hat. Eine Aktivierungsanfrage eines weiteren primären PDP-Kontextes hat somit in der Regel Erfolg. Das mobile elektronische Endgerät nimmt somit eine Überprüfung vor, wie viele Aktivierungen von primären PDP-Kontexten zu weiteren Access Point Names nebeneinander durch das mobile elektronische Endgerät erfolgen können.

Die Aufgabe wird gemäß eines weiteren Aspekts der Erfindung durch ein Telekommunikationsnetzwerk, welches zur Kommunikation wenigstens eines in dem Telekommunikationsnetzwerk registrierten mobilen elektronischen Endgerätes, insbesondere eines Mobiltelefons, zu wenigstens einem ersten Access Point Name ausgebildet ist, gelöst, wobei das Telekommunikationsnetzwerk Mittel zum Feststellen einer Aktivierungserlaubnis wenigstens eines, zusätzlich zu einem ersten primären PDP-Kontext zu dem ersten Access Point Name, weiteren primären PDP-Kontextes zu einem weiteren Access Point Name für das wenigstens eine mobile elektronischen Endgerät und Mittel zum Übertragen von Aktivierungsinformationen bzgl. der Aktivierungserlaubnis wenigstens eines weiteren primären PDP-Kontextes zu wenigstens einem weiteren Access Point Name an das wenigstens eine mobile elektronische Endgerät aufweist.

Die Mittel zum Feststellen einer Aktivierungserlaubnis wenigstens eines, zusätzlich zu einem ersten primären PDP-Kontext zu dem ersten Access Point Name, weiteren primären PDP-Kontextes zu einem weiteren Access Point Name für das wenigstens eine mobile elektronischen Endgerät können dabei auf Speichereinheiten des Betreibers des Telekommunikationsnetzwerkes zugreifen, aus denen hervorgeht, welchen Vertrag der Nutzer des mobilen Endgerätes hat und damit welche Erlaubnis zum Zugreifen auf APN's der Nutzer hat. Die Mittel können Überprüfungseinrichtungen bzw. Feststellungseinrichtungen sein. So kann es sein, dass der Nutzer des mobilen Endgerätes durch die Aktivierung eines ersten primären PDP-Kontextes Zugriff auf das Internet hat, aber beispielsweise keine Zugriff über eine weitere Aktivierung eines zweiten primären PDP-Kontextes auf ein Intranet erhält, wenn die Überprüfungseinrichtung festgestellt hat, dass der Nutzer nicht befugt ist weitere primäre PDP-Kontexte zu aktivieren.

Durch die Mittel zum Übertragen von Aktivierungsinformationen bzgl. der Aktivierungserlaubnis wenigstens eines weiteren primären PDP-Kontextes zu wenigstens einem weiteren Access Point Name an das wenigstens eine mobile elektronische Endgerät teilt das Telekommunikationsnetzwerk jedem Teilnehmer die spezifische Befugnis zur Nutzung von Diensten mit. Die Mittel zum Übertragen setzen sich aus verschiedenen Übertragungseinrichtungen zusammen. Die verschiedenen Übertragungseinrichtungen sind eine Rechenreinheit des Betreibers des mobilen Telekommunikationsnetzes mit zumindest einer Schnittstelle zu Basisstationen, die wiederum Schnittstellen zum Übertragen von Nachrichten an mobile Endgeräte aufweisen.

Das Telekommunikationsnetzwerk weist bevorzugt ferner Mittel zum Feststellen und/oder Festlegen der Anzahl möglicher nebeneinander durchführbarer Aktivierungen von primären PDP-Kontexten zu verschiedenen Access Point Names durch das wenigstens eine mobile elektronische Endgerät auf.
Gemäß des letzten Aspektes der Erfindung wird die Aufgabe durch ein mobiles elektronisches Endgerät, insbesondere Mobiltelefon, welches in einem Telekommunikationsnetzwerk registriert ist und welches zum Aktivieren wenigstens eines primären PDP-Kontextes zu wenigstens einem Access Point Name ausgebildet ist, wobei das mobile elektronische Endgerät eine Initialisierungseinrichtung zum Initiieren einer Aktivierungsanforderungsnachricht an den wenigstens einen Access Point Name aufweist, gelöst, wobei das mobile elektronische Endgerät eine Empfangseinheit zum Empfangen und Speichern von Aktivierungsinformationen bzgl. der Aktivierungserlaubnis wenigstens eines weiteren primären PDP-Kontextes zu wenigstens einem weiteren Access Point Name und eine Überprüfungseinrichtung zur Überprüfung der Aktivierungserlaubnis wenigstens eines weiteren primären PDP-Kontextes zu wenigstens einem weiteren Access Point Name aufweist.

Durch die Empfangseinheit können neben den Systeminformationen die Aktivierungsinformationen empfangen werden. Nach dem Empfang der Aktivierungsinformationen überprüft die Überprüfungseinrichtung, ob das mobile elektronische Endgerät zusätzlich zu einem erstem primären PDP-Kontext einen oder mehrere weitere(n) PDP-Kontext(e) aktivieren kann. Stellt die Überprüfungseinrichtung fest, dass keine weitere Aktivierungserlaubnis durch das Telekommunikationsnetzwerk bzw. durch den Betreiber des Telekommunikationsnetzwerkes, bei dem der Nutzer des mobilen Endgerätes registriert ist, vorliegt, sendet das mobile Endgerät keine weitere Aktivierungsanfrage zur Aktivierung eines weiteren primären PDP-Kontextes. Hierdurch wird das Funknetz nicht unnötig belastet, da bei dem Vorliegen einer Verweigerung weiterer Aktivierungserlaubnisse eh mit einer Ablehnung zu rechnen wäre.

Vorteilhaft ist ferner ein mobiles elektronisches Endgerät, bei dem die Überprüfungseinrichtung eine Einrichtung zum Überprüfen der Anzahl möglicher nebeneinander durchführbarer Aktivierungen von primären PDP-Kontexten zu unterschiedlichen Access Point Names durch das wenigstens eine mobile elektronische Endgerät aufweist. Die Einrichtung zum Überprüfen der Anzahl möglicher nebeneinander durchführbarer Aktivierungen von primären PDP-Kontexten ermöglicht es dem mobilen Endgerät festzustellen, wie viele Aktivierungen von primären PDP-Kontexten der Teilnehmer durchführen kann.

Die Erfindung wird nun anhand eines Ausführungsbeispiels unter Bezugnahme auf die beiliegende Zeichnung näher erläutert. Dabei zeigt:

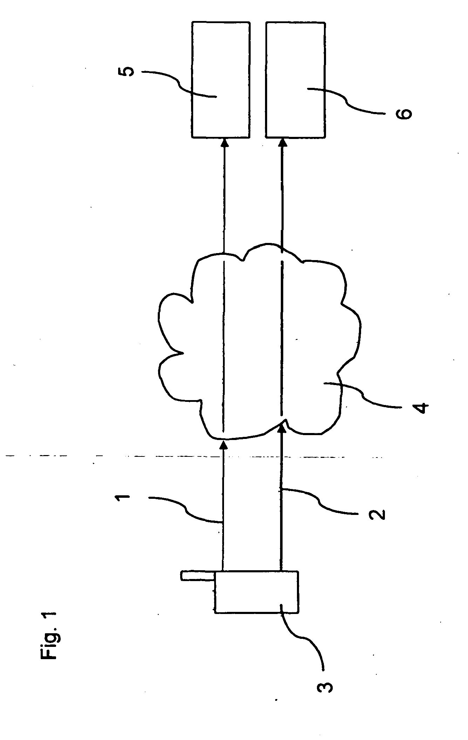

- Figur 1: eine schematische Darstellung zweier primärer PDP-Kontext-Verbindungen von einem mobilen Endgerät zu unterschiedlichen APN's.

In der Fig. 1 ist schematisch die Verbindung zweier primärer PDP-Kontexte 1, 2 von einem mobilen Endgerät 3 zu zwei Access Point Names 5, 6 dargestellt. Jeder primäre PDP-Kontext 1, 2 benutzt einen eigenen APN. In diesem Ausführungsbeispiel ist ein erster primärer PDP-Kontext 1 zu einem Access Point Name/Internet-Service-Anbieter 5 hergestellt. Zur Herstellung dieser Verbindung hat das mobile Endgerät 3 eine Aktivierungsanfrage über das mobile Telekommunikationsnetz 4 zu dem Access Point Name/Internet-Service-Anbieter 5 gestellt. Nach positiver Überprüfung durch den Betreiber des mobilen Telekommunikationsnetzes 4 wird die Verbindung zwischen den mobilen Endgerät 3 und dem Access Point Name/Internet-Service-Anbieter 5 hergestellt. Will nun der Teilnehmer des mobilen Telekommunikationsnetzes 4 eine weiteren primären PDP-Kontext 2 zu einem weiteren Access Point Name/Internet-Service-Anbieter 6 aktivieren, überprüft eine Überprüfungseinrichtung innerhalb des mobilen Endgerätes 3, ob eine Erlaubnis zum Aktivieren eines weiteren primären PDP-Kontextes 2 zu einem weiteren Access Point Name 6 vorliegt. Fällt diese Überprüfung im mobilen Endgerät 3, wobei das mobile Endgerät bevorzugt als ein Mobiltelefon ausgebildet ist, positiv aus, so sendet dieses eine Aktivierungsanfrage an den Access Point Name 6. Stellt die Überprüfungseinrichtung des mobilen Endgerätes 3 fest, dass keine Erlaubnis zur Aktivierung eines weiteren primären PDP-Kontextes zu einem weiteren Access Point Name vorliegt unterbleibt das Aussenden einer Aktivierungsanfrage, so dass Funkressourcen nicht unnötig in Anspruch genommen werden.

Ist beispielsweise ein erster primärer PDP-Kontext 1 beim Einschalten des mobiles Endgerätes 3 aktiviert worden und somit eine erste Verbindung zu einem Internet-Service-Anbieter hergestellt, so überprüft das mobile Endgerät 3, ob weitere primäre PDP-Kontexte zu anderen Internet-Service-Anbietern hergestellt werden können. D.h, möchte der Teilnehmer des mobilen Telekommunikationsnetzes 4 über sein mobiles Endgerät 3 einen zweiten primären PDP-Kontext etablieren, z.B. eine Verbindung zum Firmennetz herstellen, überprüft die Überprüfungseinrichtung des mobilen Endgerätes 3 die von dem mobilen Telekommunikationsnetzes 4 zusammen mit den Systeminformationen zu dem mobilen Endgerät 3 gesendeten Aktivierungsinformationen. Erst nach Feststellung, dass eine weitere Aktivierung eines primären PDP-Kontextes erlaubt ist, sendet das mobile Endgerät 3 die Aktivierungsanfrage an den weiteren Access Point Name. Hierdurch wird eine Verschwendung der Funkressourcen vermieden.

## Patentansprüche

1. Verfahren zum Mitteilen von Aktivierungsinformationen über die Möglichkeit eines Aktivierungsaufbaus wenigstens eines, zusätzlich zu einem ersten primären PDP-Kontext zu einem ersten Access Point Name, weiteren primären PDP-Kontextes zu einem weiteren Access Point Name durch eine mobiles Telekommunikationsnetz an ein in dem mobilen Telekommunikationsnetz registriertes mobiles Endgerät, wobei durch den Aktivierungsaufbau eines primären PDP-Kontextes zu einem Access Point Name das mobile Telekommunikationsnetz dem mobilen Endgerät eine Verbindung zu einem Internet-Service-Anbieter zur Verfügung stellt, wobei die Aktivierungsinformationen zusammen mit den Systeminformationen zum bestimmungsgemäßen Betrieb des mobilen elektronischen Endgerätes über Luft- bzw. Funkschnittstellen von Basisstationen des mobilen Telekommunikationsnetzes an das mobile Endgerät übertragen werden.

2. Verfahren nach Anspruch 1, wobei Informationen über die Anzahl möglicher Aktivierungsaufbaue an weiteren primären PDP-Kontexten zu weiteren Access Point Names, die das mobile Endgerät durchführen kann, zusammen mit den Systeminformationen an das mobile Endgerät übertragen werden.

3. Verfahren nach einem der Ansprüche 1 oder 2, wobei von einer Rechnereinheit des Betreibers des mobilen Telekommunikationsnetzes die Aktivierungsinformationen und/oder die Informationen über die Anzahl möglicher Aktivierungsaufbaue an weiteren primären PDP-Kontexten zusammen mit den Systeminformationen zum bestimmungsgemäßen Betrieb des mobilen elektronischen Endgerätes an das in dem mobilen Telekommunikationsnetz registrierte mobile Endgerät übertragen werden.

4. Verfahren zum Aktivieren eines, zusätzlich zu einem ersten primären PDP-Kontext zu einem ersten Access Point Name, weiteren primären PDP-Kontextes zu einem weiteren Access Point Name innerhalb eines mobilen Telekommunikationsnetzes durch ein in dem mobilen Telekommunikationsnetz registriertes mobiles elektronisches Endgerät, insbesondere durch ein Mobiltelefon, wobei das mobile elektronische Endgerät eine Überprüfung der Aktivierungsinformationen über die Möglichkeit eines Aktivierungsaufbaus wenigstens eines, zusätzlich zu einem ersten primären PDP-Kontext zu einem ersten Access Point Name, weiteren primären PDP-Kontextes zu einem weiteren Access Point Name und/oder eine Überprüfung der Informationen über die Anzahl der möglichen Aktivierungsaufbaue an weiteren primären PDP-Kontexten zu weiteren Access Point Names, die gemäß einem Verfahren nach einem der Ansprüche 1 bis 3 dem mobilen Endgerät mitgeteilt worden sind, durchführt.

5. Verfahren nach Anspruch 4, wobei das mobile Endgerät nach der Überprüfung und bei Feststellung der Möglichkeit des Aktivierens von weiteren primären PDP-Kontexten an weitere Access Point Names wenigstens einen Aktivierungsaufbau eines weiteren primären PDP-Kontextes zu einem weiteren Access Point Name durchführt.

6. Verfahren nach einem der Ansprüche 4 oder 5, wobei das mobile elektronische Endgerät eine Überprüfung vornimmt, wie viele Aktivierungen von primären PDP-Kontexten zu weiteren Access Point Names nebeneinander durch das mobile elektronische Endgerät erfolgen können.

7. Telekommunikationsnetzwerk, welches zur Kommunikation wenigstens eines in dem Telekommunikationsnetzwerk registrierten mobilen elektronischen Endgerätes, insbesondere eines Mobiltelefons, zu wenigstens einem ersten Access Point Name ausgebildet ist, **dadurch gekennzeichnet, dass** das Telekommunikationsnetzwerk Mittel zum Feststellen einer Aktivierungserlaubnis wenigstens eines, zusätzlich zu einem ersten primären PDP-Kontext zu dem ersten Access Point Name, weiteren primären PDP-Kontextes zu einem weiteren Access Point Name für das wenigstens eine mobile elektronischen Endgerät und Mittel zum Übertragen von Aktivierungsinformationen bzgl. der Aktivierungserlaubnis wenigstens eines weiteren primären PDP-Kontextes zu wenigstens einem weiteren Access Point Name an das wenigstens eine mobile elektronische Endgerät aufweist.

8. Telekommunikationsnetzwerk nach Anspruch 7, **dadurch gekennzeichnet, dass** das Telekommunikationsnetzwerk Mittel zum Feststellen und/oder Festlegen der Anzahl möglicher nebeneinander durchführbarer Aktivierungen von primären PDP-Kontexten zu verschiedenen Access Point Names durch das wenigstens eine mobile elektronische Endgerät aufweist.

9. Mobiles elektronisches Endgerät, insbesondere Mobiltelefon, welches in einem Telekommunikationsnetzwerk registriert ist und welches zum Aktivieren wenigstens eines primären PDP-Kontextes zu wenigstens einem Access Point Name ausgebildet ist, wobei das mobile elektronische Endgerät eine Initialisierungseinrichtung zum Initiieren einer Aktivierungsanforderungsnachricht an den wenigstens einen Access Point Name aufweist, **dadurch gekennzeichnet, dass** das mobile elektronische Endgerät eine Empfangseinheit zum Empfangen und Speichern von Aktivierungsinformationen bzgl. der Aktivierungserlaubnis wenigstens eines weiteren primären PDP-Kontextes zu wenigstens einem weiteren Access Point Name und eine Überprüfungseinrichtung zur Überprüfung der Aktivierungserlaubnis wenigstens eines weiteren primären PDP-Kontextes zu wenigstens einem weiteren Access Point Name aufweist.

10. Mobiles elektronisches Endgerät nach Anspruch 9, **dadurch gekennzeichnet, dass** die Überprüfungseinrichtung eine Einrichtung zum Überprüfen der Anzahl möglicher nebeneinander durchführbarer Aktivierungen von primären PDP-Kontexten zu unterschiedlichen Access Point Names durch das wenigstens eine mobile elektronische Endgerät aufweist.

## Claims

1. Method of imparting activation information regarding the possibility of setting up activation of at least one further primary PDP context for a further Access Point Name in addition to a first primary PDP context for a first Access Point Name by means of a mobile telecommunications network to a mobile terminal registered in the mobile telecommunications network, wherein by setting up activation of a primary PDP context for an Access Point Name the mobile telecommunications network provides the mobile terminal with a connection to an Internet Service Provider, wherein the activation information together with the system information for the intended operation of the mobile electronic terminal is transmitted to the mobile terminal via wireless or radio interfaces of base stations of the mobile telecommunications network.

2. Method according to claim 1, wherein information regarding the number of possible activation set-ups at further primary PDP contexts for further Access Point Names which the mobile terminal is able to carry out is transmitted, together with the system information, to the mobile terminal.

3. Method according to one of claims 1 or 2, wherein the activation information and/or the information regarding the number of possible activation set-ups at further primary PDP contexts, together with the system information for the intended operation of the mobile electronic terminal, is transmitted to the mobile terminal registered in the mobile telecommunications network by a computer unit of the operator of the mobile telecommunications network.

4. Method of activating a further primary PDP context for a further Access Point Name in addition to a first primary PDP context for a first Access Point Name within a mobile telecommunications network by means of a mobile electronic terminal registered in the mobile telecommunications network, more particularly by a mobile telephone, wherein the mobile electronic terminal runs a check on the activation information by means of the possibility of setting up the activation of at least one further primary PDP context for a further Access Point Name, in addition to a first primary PDP context for a first Access Point Name and/or a check on the information as to the number of possible activation set-ups at other primary PDP contexts for other Access Point Names which have been notified to the mobile terminal by a method according to one of claims 1 to 3.

5. Method according to claim 4, wherein the mobile terminal, after the check and on establishing the possibility of activating further primary PDP contexts for other Access Point Names, sets up at least one activation of a further primary PDP context for a further Access Point Name.

6. Method according to one of claims 4 or 5, wherein the mobile electronic terminal runs a check as to how many activations of primary PDP contexts for further Access Point Names can be carried out side by side by means of the mobile electronic terminal.

7. Telecommunications network which is adapted for the communication of at least one mobile electronic terminal, particularly a mobile telephone, registered in the telecommunications network, with at least one first Access Point Name, **characterised in that** the telecommunications network comprises means for determining the activation authorisation of at least one further primary PDP context for a further Access Point Name for the at least one mobile electronic terminal in addition to a first primary PDP context for the first Access Point Name, and means for transmitting activation information regarding the activation authorisation of at least one further primary PDP context for at least one further Access Point Name to the at least one mobile electronic terminal.

8. Telecommunications network according to claim 7, **characterised in that** the telecommunications network comprises means for determining and/or fixing the number of possible activations of primary PDP contexts for different Access Point Names that may be carried out side by side by the at least one mobile electronic terminal.

9. Mobile electronic terminal, particularly a mobile telephone, which is registered in a telecommunications network and which is configured to activate at least one primary PDP context for at least one Access Point Name, the mobile electronic terminal comprising an initialising device for initiating an activation request message to the at least one Access Point Name, **characterised in that** the mobile electronic terminal comprises a receiving unit for receiving and storing activation information regarding the activation authorisation of at least one further primary PDP context for at least one further Access Point Name and a checking device for checking the activation authorisation of at least one further primary PDP context for at least one further Access Point Name.

10. Mobile electronic terminal according to claim 9, **characterised in that** the checking device comprises means for checking the number of possible activations of primary PDP contexts for different Access Point Names that may be carried out side by side by the at least one mobile electronic terminal.

## Revendications

1. Procédé de communication d'informations d'activation sur la possibilité de l'établissement d'une activation d'au moins un autre contexte PDP primaire à un autre nom de point d'accès, en plus d'un premier contexte PDP primaire avec un premier nom de point d'accès, par un réseau de télécommunication mobile sur un terminal mobile enregistré dans le réseau de télécommunication mobile, dans lequel, par l'établissement de l'activation d'un contexte PDP primaire avec un nom de point d'accès, le réseau de télécommunication mobile met à disposition du terminal mobile une liaison à un prestataire de services Internet et dans lequel les informations d'activation sont transmises conjointement avec les informations système au terminal mobile dans le but du fonctionnement conforme aux instructions du terminal électronique mobile par des interfaces aériennes ou radioélectriques de stations de base du réseau de télécommunication mobile.

2. Procédé selon la revendication 1, dans lequel des informations sur le nombre d'établissements d'activation possibles à d'autres contextes PDP primaires avec d'autres noms de point d'accès, que le terminal mobile peut exécuter, sont transmises au terminal mobile conjointement avec les informations système.

3. Procédé selon l'une quelconque des revendications précédentes 1 ou 2, dans lequel une unité informatique de l'exploitant du réseau de télécommunication mobile transmet au terminal mobile, enregistré dans le réseau de télécommunication mobile, les informations d'activation et/ou les informations sur le nombre d'établissements d'activation possibles à d'autres contextes PDP primaires conjointement avec les informations système pour le fonctionnement conforme aux instructions du terminal mobile électronique.

4. Procédé d'activation d'un autre contexte PDP primaire avec un autre nom de point d'accès, en plus d'un premier contexte PDP primaire avec un premier nom de point d'accès, à l'intérieur d'un réseau de télécommunication mobile par un terminal électronique mobile, en particulier un téléphone mobile, enregistré dans le réseau de télécommunication mobile, dans lequel le terminal électronique mobile effectue une vérification des informations d'activation sur la possibilité de l'établissement d'une activation d'au moins un autre contexte PDP primaire avec un autre nom de point d'accès, en plus d'un premier contexte PDP primaire avec un premier nom de point d'accès, et/ou une vérification des informations sur le nombre d'établissements d'activation possibles à d'autres contextes PDP primaires avec d'autres noms de point d'accès, qui sont communiquées au terminal mobile selon un procédé d'après l'une quelconque des revendications 1 à 3.

5. Procédé selon la revendication 4, dans lequel, après la vérification et en cas de détermination de la possibilité de l'activation d'autres contextes PDP primaires avec d'autres noms de point d'accès, le terminal mobile exécute au moins un établissement d'activation d'un autre contexte PDP primaire avec un autre nom de point d'accès.

6. Procédé selon l'une quelconque des revendications 4 ou 5, dans lequel le terminal électronique mobile réalise une vérification du nombre d'activations de contextes PDP primaires avec d'autres noms de point d'accès qui peuvent avoir lieu simultanément par le biais du terminal électronique mobile.

7. Réseau de télécommunication, qui est conçu pour la communication d'au moins un terminal électronique mobile, en particulier un téléphone mobile, enregistré dans le réseau de télécommunication à au moins un premier nom de point d'accès, **caractérisé en ce que** le réseau de télécommunication comprend des moyens destinés à la détermination d'une autorisation d'activation d'au moins un autre contexte PDP primaire avec un autre nom de point d'accès, en plus d'un premier contexte PDP primaire au premier nom de point d'accès, pour le ou les terminaux électroniques mobiles et des moyens destinés à la transmission d'informations d'activation concernant l'autorisation d'activation d'au moins un autre contexte PDP primaire avec un autre nom de point d'accès au ou aux terminaux électroniques mobiles.

8. Réseau de télécommunication selon la revendication 7, **caractérisé en ce que** le réseau de télécommunication comporte des moyens destinés à définir et/ou déterminer le nombre d'activations possibles, pouvant être effectuées simultanément, de contextes PDP primaires avec différents noms de point d'accès par le ou les terminaux électroniques mobiles.

9. Terminal électronique mobile, en particulier un téléphone mobile, qui est enregistré dans un réseau de télécommunication et qui est conçu pour l'activation d'au moins un contexte PDP primaire avec au moins un nom de point d'accès, le terminal électronique mobile comportant un système d'initialisation servant à lancer un message de demande d'activation au ou aux noms de point d'accès, **caractérisé en ce que** le terminal électronique mobile comporte une unité de réception destinée à la réception et l'enregistrement d'informations d'activation au sujet de l'autorisation d'activation d'au moins un autre contexte PDP primaire avec au moins un autre nom de point d'accès et un système de vérification destiné à la vérification de l'autorisation d'activation d'au moins un autre contexte PDP primaire avec au moins un autre nom de point d'accès.

10. Terminal électronique mobile selon la revendication 9, **caractérisé en ce que** le système de vérification comporte un système destiné à la vérification du nombre d'activations possibles, pouvant être effectuées simultanément, de contextes PDP primaires avec différents noms de point d'accès par le ou les terminaux électroniques mobiles.
